# FASCICULE DE BREVET EUROPEEN

(11) **EP 3 212 862 B1**
(45) Date de publication et mention de la délivrance du brevet: **24.04.2019**
(21) Numéro de dépôt: 14808679.6
(22) Date de dépôt: 31.10.2014
(51) Int. Cl.: E04H 12/12, B28B 7/00, E04H 12/18, F03D 1/00, E04H 12/34

(54) **PROCÉDÉ DE FABRICATION DE BLOCS DE CONSTRUCTION EN BÉTON POUR UNE TOUR D'AÉROGÉNÉRATEUR ET SYSTÈME ASSOCIÉ**
VERFAHREN ZUR HERSTELLUNG VON BETONBAUBLÖCKEN FÜR EINEN WINDTURBINENTURM UND ZUGEHÖRIGES SYSTEM
METHOD FOR MANUFACTURING CONCRETE CONSTRUCTION BLOCKS FOR A WIND-TURBINE TOWER AND ASSOCIATED SYSTEM

(43) Date de publication de la demande: 06.09.2017
(73) Titulaire: Soletanche Freyssinet, 92500 Rueil Malmaison (FR)
(72) Inventeur: FABRY, Nicolas, 92160 Antony (FR); MELEN, Benoit, 92270 Bois Colombes (FR); MELLIER, Erik, 78220 Viroflay (FR)
(74) Mandataire: Cabinet Plasseraud
(86) Numéro de dépôt international: PCT/FR2014/052774
(87) Numéro de publication internationale: WO 2016/066907

(56) Documents cités:
- EP-A2- 1 156 175
- DE-A1-102008 016 828
- US-A1- 2013 001 954

## Description

L'invention concerne un procédé de fabrication de blocs de construction en béton pour une tour d'aérogénérateur constituée d'au moins deux blocs successifs.

Typiquement, une telle tour est surmontée d'une nacelle et d'un rotor composé de plusieurs pâles pour former l'aérogénérateur.

Deux blocs successifs sont empilés l'un sur l'autre par une face de contact de chacun des deux blocs.

Il est connu de fabriquer chaque bloc par assemblage sur le site d'implantation de l'aérogénérateur de plusieurs panneaux, ou encore par coulage de béton dans un moule, par exemple de forme cylindrique. Dans ce cas, une fois le béton pris, le démoulage permet d'obtenir le bloc de construction en béton directement sous forme d'une seule pièce.

Deux blocs successifs sont solidarisés par un joint coulé en béton, voire également à l'aide de mortier ou de coulis de ciment selon l'épaisseur du joint au niveau des faces de contact de chaque bloc.

Ces joints en béton s'avèrent nécessaires du fait des imperfections ou des irrégularités géométriques inhérentes aux procédés de fabrication des blocs, le joint assurant une reprise de continuité entre les blocs.

Or, de telles étapes pour constituer les joints à partir de béton coulé sur site présentent des inconvénients. Un système étanche doit être mis en place entre chaque bloc au moment de la fabrication du joint ; et une durée minimale est nécessaire pour que le joint offre une résistante mécanique suffisante. Ces étapes sont par conséquent longues et complexes à mettre en oeuvre.

Le but de l'invention est de remédier au moins partiellement à ces inconvénients.

A cet effet, l'invention a pour objet un procédé de fabrication de blocs de construction en béton pour une tour d'aérogénérateur constituée d'au moins un premier bloc et d'un deuxième blocs successifs solidarisés l'un à l'autre par une face de contact de chacun des deux blocs, au moins un bloc étant réalisé par un système de fabrication à partir d'une cage d'armatures, le procédé de fabrication comprenant les étapes conformément à la revendication 1.

Grâce au procédé selon l'invention, les faces de contact des blocs successifs sont conjuguées l'une à l'autre, de sorte qu'il n'est pas nécessaire de constituer ou ménager des joints de béton entre chaque bloc sur site.

Au contraire, une simple colle, par exemple de type époxy, suffit à solidariser les blocs entre eux par leurs faces de contact. Cette colle époxy permet de rétablir une continuité, a priori étanche, sans nécessairement apporter toute la résistance au joint : en pratique, des armatures passives ou un effort de précontrainte sont requis pour une résistance mécanique suffisante.

Selon une autre caractéristique de l'invention, au cours de l'étape pour couler du béton de manière à obtenir le deuxième bloc, le premier bloc de béton est disposé en regard du coffrage de sorte qu'ils soient dans le prolongement l'un de l'autre.

Selon une autre caractéristique de l'invention, le coffrage est positionné à une distance d'une base du système de fabrication de l'ordre de la dimension du premier bloc de béton dans une direction orthogonale à la face de contact.

Selon une autre caractéristique de l'invention, la dimension est une hauteur du premier bloc de béton.

Selon une autre caractéristique de l'invention, le procédé comprend une étape d'extraction du premier bloc de béton hors du système de fabrication.

Selon une autre caractéristique de l'invention, le procédé comprend une étape de transport de chaque cage d'armature dans le coffrage.

Selon un autre mode de réalisation il est prévu un système de fabrication de blocs de construction en béton pour une tour d'aérogénérateur constituée d'une pluralité desdits blocs de construction, deux blocs successifs de la tour étant destinés à être solidarisés l'un à l'autre par une face de contact de chacun de deux blocs successifs, le système de fabrication comprenant un coffrage, une base et un moyen pour disposer le coffrage à une distance de la base du système de fabrication de l'ordre de la dimension d'un premier bloc de béton dans une direction orthogonale à la face de contact.

Le coffrage comprend deux demi-coques.

Le moyen pour disposer le coffrage comprend deux tables, chaque table comprenant une plateforme sur laquelle repose une demi-coque du coffrage.

Le système comprend des moyens de transport de chaque cage d'armatures et/ou bloc et/ou du coffrage.

L'invention a également pour objet un procédé d'assemblage d'une tour d'aérogénérateur, comprenant :
- une étape de fabrication d'au moins deux blocs de construction en béton obtenu par le procédé de fabrication tel que décrit précédemment,
- une étape de transport desdits au moins deux blocs, et
- une étape de solidarisation en un ensemble de blocs desdits au moins deux blocs obtenus au cours de ladite étape de fabrication.

Selon une autre caractéristique de l'invention, le procédé comprend une étape de levage dudit ensemble de blocs.

Selon une autre caractéristique de l'invention, l'étape de solidarisation et l'étape de levage sont au moins partiellement concomitantes.

Selon une autre caractéristique de l'invention, l'étape de solidarisation d'un premier ensemble de blocs est au moins concomitante d'un deuxième ensemble de blocs.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre un aérogénérateur comprenant une tour munie de blocs cylindriques et tronconiques assemblée selon la présente invention ;
- la figure 2a illustre une vue en perspective d'un bloc cylindrique de construction en béton obtenu selon un procédé de fabrication selon la présente invention ;
- la figure 2b illustre une vue en perspective d'un bloc tronconique de construction en béton obtenu selon un procédé de fabrication selon la présente invention ;
- la figure 3 est une vue de côté d'un système de fabrication selon la présente invention ;
- la figure 4 illustre une vue en perspective du système d'assemblage de la figure 3 ; et
- la figure 5 illustre un chronogramme d'un procédé d'assemblage de la tour de la figure 1 selon la présente invention.

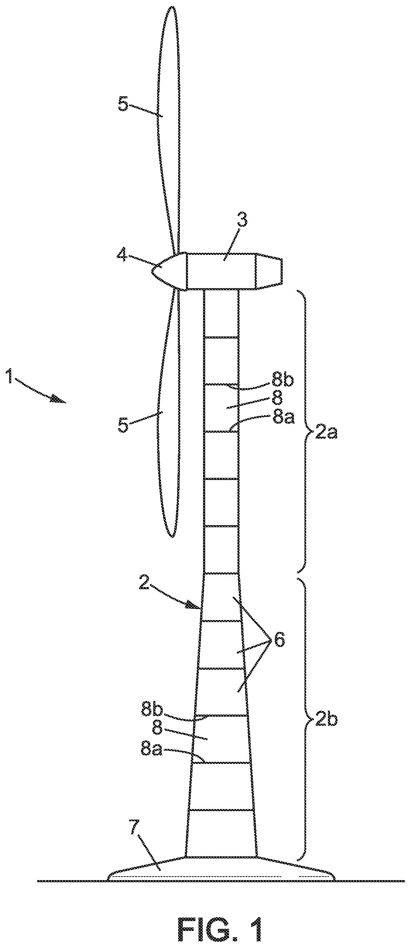

Comme illustré à la figure 1, un aérogénérateur 1 comprend une tour 2 surmontée d'une nacelle 3 et d'un rotor 4 composé de plusieurs pâles 5.

La tour 2 comprend une pluralité de blocs 6 empilés les uns sur les autres, de sorte que la tour 2 présente une forme générale allongée.

Pour la suite de la description, il est considéré que la tour 2 s'étend dans une direction verticale.

La tour 2 est rigidement solidaire d'une fondation ou d'une semelle de fondation 7.

Les blocs 6 sont de préférence d'une même hauteur.

Chaque bloc 6 est constitué à partir d'un matériau tel que du béton armé.

Comme visible sur la figure 1, chaque bloc 6 d'une partie supérieure 2a présente une forme générale cylindrique tandis que chaque bloc 6 d'une partie inférieure 2b présente une forme générale tronconique.

Bien entendu, la présente invention ne s'applique pas uniquement à la tour 2 illustrée, et d'autres formes de tours sont possibles, comme une tour composée uniquement de blocs cylindriques ou une tour composée uniquement de blocs tronconiques.

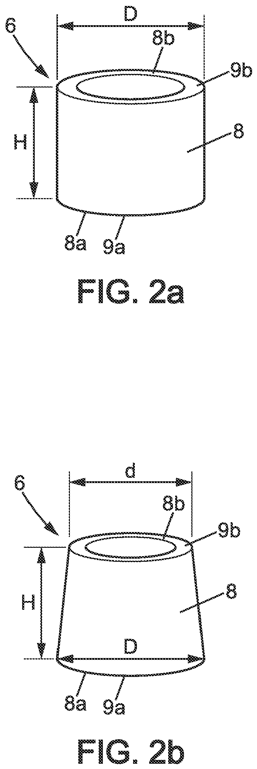

Comme visible sur la figure 2a, le bloc cylindrique 6 présente une hauteur H et un diamètre extérieur D.

Comme visible sur la figure 2b, le bloc tronconique 6 présente une hauteur H, un grand diamètre extérieur D et un petit diamètre extérieur d inférieur au grand diamètre D.

Chaque bloc 6 est avantageusement creux.

Chaque bloc 6 comprend une paroi latérale 8 limitée par une extrémité dite inférieure 8a et une extrémité supérieure 8b.

L'extrémité inférieure 8a d'un bloc 6 donné est en contact avec l'extrémité supérieure 8b du bloc 6 disposé au-dessous.

Les extrémités inférieures 8a et 8b comprennent chacune un anneau, respectivement référencés 9a et 9b, qui s'étendent chacune dans un plan orthogonal à la direction de la hauteur H de la paroi latérale 8.

Chaque anneau 9a d'un bloc 6 est en regard et en contact de l'anneau 9b du bloc disposé immédiatement au-dessous de lui dans la tour 2, de sorte que chaque anneau 9a, 9b, forme une face de contact entre deux blocs 6 successifs.

Chaque bloc 6 est réalisé à partir d'une cage d'armatures 10 assemblée autour d'une structure intérieure 11 d'un coffrage 21 de préfabrication.

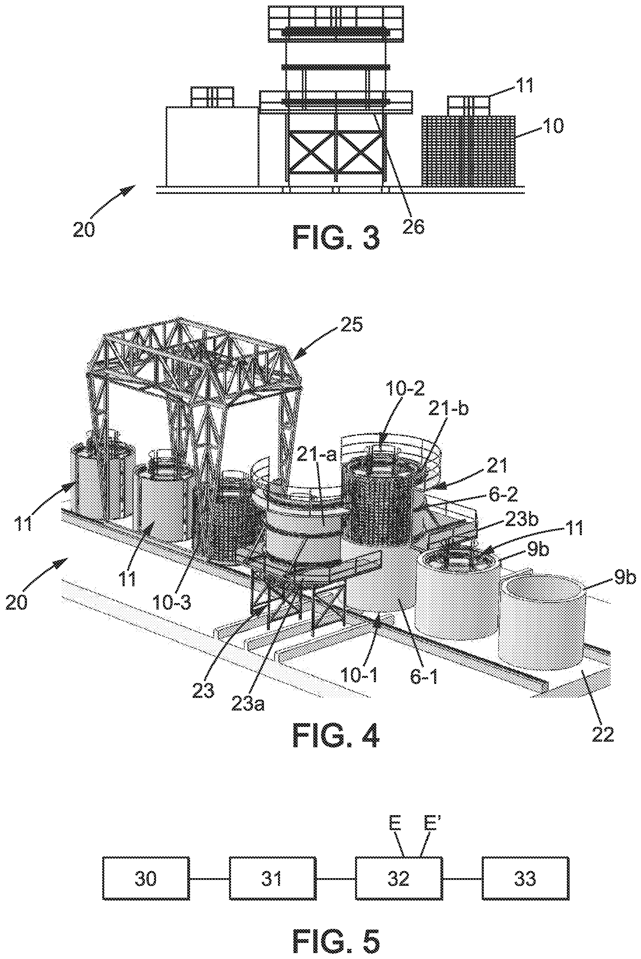

Comme visible sur les figures 3 et 4, le système de fabrication 20 comprend le coffrage 21, une base 22 et un moyen 23 pour disposer le coffrage 21 à une distance donnée de la base 22.

Cette distance est de l'ordre de la hauteur H.

Le coffrage 21 comprend deux demi-coques 21a et 21b.

Le moyen 23 pour disposer le coffrage 21 comprend deux tables 23a, 23b, chaque table comprenant une plateforme 24 sur laquelle s'appuie chaque demi-coque du coffrage 21.

Le système 20 comprend également des moyens de transport 25 de chaque cage d'armatures, tel qu'un pont ou un portique roulant par exemple.

Le système 20 comprend des moyens de contrôle géométrique des dimensions de chaque bloc 6, par mesure au théodolite par exemple.

Le procédé de fabrication selon la présente invention met en oeuvre le système de fabrication 20.

Une première étape consiste à couler du béton autour d'une première cage d'armatures 10-1 de manière à obtenir un premier bloc de construction 6-1.

On note que le terme « premier » n'est pas limitatif du premier bloc fabriqué par le procédé selon l'invention mais s'applique à l'un des blocs fabriqués, le bloc suivant étant arbitrairement dénommé ci-après « deuxième » bloc.

Le premier bloc 6-1 comprend par exemple une face de contact qui est par exemple la face de contact supérieure 9b si le premier bloc 6-1 est destiné à être le bloc de la tour disposé sur la fondation 7 ou à être au bas de la partie supérieure 2a de la tour 2.

Une deuxième étape consiste à couler du béton autour d'une deuxième cage d'armatures 10-2 de manière à obtenir un deuxième bloc de construction en béton 6-2, la deuxième cage d'armatures 10-2 étant disposée dans le coffrage 21.

Les deux demi-coques du coffrage 21 sont alors rapprochées jusqu'à ce que les deux demi-coquilles enferment la deuxième cage d'armatures 10-2.

Comme particulièrement visible sur les figures 3 et 4, le coffrage est agencé de sorte que la première face de contact 9b du premier bloc 6-1 constitue une paroi de délimitation 26 du coulage.

La paroi de délimitation 26 du béton permet de former la face de contact inférieure 9a du bloc 6-2.

Le coffrage 21 est de préférence constitué d'une pluralité de parois rigides.

Pour former la face de contact inférieure 9a du bloc 6-2, l'une des parois du coffrage 21 est remplacée par la face de contact 9b du bloc 6-1 précédemment coulé, l'interface entre les 2 blocs constituant alors un joint conjugué.

Les deux blocs 6-1 et 6-2 sont désolidarisés après moulage du deuxième bloc 6-2, notamment grâce à un produit de décoffrage tel qu'une huile, une cire ou une eau savonneuse enduite sur la face de contact 9b du bloc 6-1 préalablement au coulage du béton.

Il est avantageux et souvent nécessaire d'effectuer des opérations de contrôle géométrique du coffrage avant le moulage de chaque bloc et de chaque bloc nouvellement moulé.

Comme visible sur les figures 3 et 4, au cours de la deuxième étape, le premier bloc de béton 6-1 est disposé en regard du coffrage 21 de sorte que le premier bloc de béton 6-1 et le coffrage 21 sont dans le prolongement l'un de l'autre.

En d'autres termes, le bloc 6-1 est disposé sous le coffrage 21, et le bloc 6-1 et la cage d'armatures 10-2 sont empilés selon la direction de la hauteur H.

Comme déjà expliqué, au cours du procédé de fabrication, le coffrage 21 est positionné au-dessus de la base 22 à une hauteur de l'ordre de la hauteur H du bloc 6-1.

Le procédé comprend une étape d'extraction du premier bloc de béton 6-1 hors du système 20. Cette étape est ultérieure à l'étape de fabrication du deuxième bloc 6-2, c'est-à-dire après démoulage par séparation des deux demi-coques du coffrage 21.

Le procédé comprend également une étape de transport de chaque cage d'armatures 10 dans le coffrage 21 par les moyens de transport 25.

Une fois extrait le premier bloc 6-1, le deuxième bloc 6-2 est déposé sous le coffrage 21.

Ensuite, une troisième cage d'armatures 10-3 est transportée dans le coffrage. Les deux-demi coques enserrent ou enferment l'élément 10-3 et le béton est coulé, la paroi de délimitation 26 de l'extrémité supérieure 8b du bloc 6-2 permettant formation de la face de contact inférieure 9a du troisième bloc 6-3.

Puis, le deuxième bloc 6-2 est extrait du système 20 et le troisième bloc 6-3 descendu sous le coffrage 21.

Les autres blocs sont fabriqués en répétant le même procédé.

Ainsi, selon l'invention, deux blocs successifs sont conjugués, c'est-à-dire que la face de contact supérieure du bloc inférieur est complémentaire de la face de contact inférieure du bloc immédiatement supérieur dans la tour 2.

Par exemple, la face de contact 9b du premier bloc 6-1 est complémentaire de la face de contact 9a du deuxième bloc 6-2.

La face de contact 9b du deuxième bloc 6-2 est complémentaire de la face de contact 9a du troisième bloc 6-3.

On note que la face 9a du premier bloc fabriqué et la face 9b du dernier bloc fabriqué ne sont pas conjuguées et coffrées simplement selon une technique connue de l'état de l'art, par exemple par ajout d'une paroi amovible formant fond de moule.

L'invention concerne également un procédé d'assemblage d'une tour d'aérogénérateur, illustré à la figure 5, comprenant :
- une étape de fabrication 30 d'au moins deux blocs 6 de construction en béton obtenus par le procédé de fabrication décrit précédemment,
- une étape de transport 31 desdits au moins deux blocs, et
- une étape de solidarisation 32 en un ensemble E de blocs d'au moins lesdits deux blocs 6.

Néanmoins, il est également possible que certains blocs de la tour ne soient pas obtenus par le procédé décrit précédemment de joints conjugués.

De préférence, le procédé d'assemblage comprend une étape de levage 33 de l'ensemble E de blocs 6, par exemple par une grue ou tout autre moyen de levage approprié.

Avantageusement, l'étape de solidarisation et l'étape de levage sont au moins partiellement concomitantes.

La tour d'aérogénérateur est constituée par l'assemblage d'un ou plusieurs ensembles de bloc, les ensembles étant levés les uns après les autres de sorte que les blocs sont superposés verticalement.

De préférence, l'étape de solidarisation d'un ensemble E de blocs 6 est concomitante de l'étape de levage d'un autre ensemble E' de blocs. En d'autres termes, pendant que l'un E des ensembles est levé, un autre ensemble E' est solidarisé.

Ainsi, la tour d'aérogénérateur est assemblée, au moins partiellement, en temps masqué, puisque en parallèle sont menés d'une part la solidarisation des blocs en ensemble de blocs, et d'autre part le levage des ensembles.

Le procédé d'assemblage selon la présente invention permet un gain de temps et un gain économique.

La présente invention permet de limiter la durée nécessaire à la construction de la tour en limitant le nombre et la durée cumulée des manipulations des blocs, puisque des étapes sont menées en parallèle, sur le site d'implantation de la tour pour aérogénérateur, comme déjà mentionné.

En particulier, la solidarisation des blocs entre eux pour constituer la tour pour aérogénérateur est simplifiée, puisque de la colle appliquée sur les joints secs, par exemple de type époxy, suffit à constituer des joints étanches, d'épaisseur quasiment nulle et limite également le nombre et la durée des opérations d'exécution des joints ou de contrôle géométrique de la tour.

La résistance mécanique complète des joints peut être assurée par la présence d'armatures actives de précontrainte ou d'armatures passives, connues de l'état de la technique.

De plus, la présente invention assure une continuité géométrique de bonne qualité puisque les faces de contact des blocs successifs sont conjuguées, comme déjà expliqué.

## Revendications

1. Procédé de fabrication de blocs de construction en béton (6) pour une tour (2) d'aérogénérateur (1) constituée d'au moins un premier (6-1) et un deuxième (6-2) blocs successifs solidarisés l'un à l'autre par une face de contact de chacun des deux blocs, lesdits au moins deux blocs étant réalisés par un système de fabrication (20) à partir d'une cage d'armatures (10), le procédé de fabrication comprenant les étapes suivantes :
- couler du béton dans une première cage d'armatures (10-1) de manière à obtenir le premier bloc (6-1) de construction en béton comprenant une première face de contact (9b),
- couler du béton dans une deuxième cage d'armatures (10-2) de manière à obtenir le deuxième bloc (6-2) de construction en béton, la deuxième cage d'armatures étant disposée dans un coffrage (21) et le coffrage (21) étant agencé de sorte que la première face de contact (9b) du premier bloc (6-1) constitue une paroi de délimitation (26) du coulage du béton de sorte à former une face de contact (9) du deuxième bloc (6-2), et
- désolidariser le premier bloc (6-1) et le deuxième bloc (6-2) après moulage du deuxième bloc (6-2), notamment grâce à un produit de décoffrage enduit sur la face de contact (9b) du premier bloc (6-1) préalablement au coulage du béton.

2. Procédé selon la revendication 1, dans lequel, au cours de l'étape pour couler du béton de manière à obtenir le deuxième bloc (6-2), le premier bloc de béton (6-1) est disposé en regard du coffrage (21) de sorte que le premier bloc de béton (6-1) et la deuxième cage d'armatures (10-2) sont dans le prolongement l'un de l'autre.

3. Procédé selon l'une des revendications 1 ou 2, dans lequel le coffrage (21) est positionné à une distance d'une base (22) du système de fabrication (20) de l'ordre de la dimension du premier bloc de béton dans une direction orthogonale à la face de contact.

4. Procédé selon la revendication 3, dans lequel la dimension est une hauteur (H) du premier bloc de béton (6-1).

5. Procédé selon l'une des revendications précédentes, comprenant une étape de contrôle géométrique du coffrage avant le moulage de chaque bloc et/ou une étape de contrôle des dimensions de chaque bloc moulé.

6. Procédé d'assemblage d'une tour d'aérogénérateur, comprenant :
- une étape de fabrication d'au moins deux blocs de construction en béton obtenu par le procédé de fabrication selon l'une des revendications 1 à 5,
- une étape de transport desdits au moins deux blocs, et
- une étape de solidarisation en un ensemble de blocs desdits au moins deux blocs obtenus au cours de ladite étape de fabrication.

7. Procédé d'assemblage selon la revendication 6, comprenant une étape de levage dudit ensemble de blocs.

8. Procédé d'assemblage selon la revendication 7, dans lequel l'étape de solidarisation et l'étape de levage sont au moins partiellement concomitantes.

9. Procédé d'assemblage selon la revendication précédente, dans lequel l'étape de solidarisation d'un premier ensemble de blocs est au moins concomitante de l'étape de levage d'un deuxième ensemble de blocs.

## Patentansprüche

1. Verfahren zur Herstellung von Betonbaublöcken (6) für einen Turm (2) einer Windturbine (1), der mindestens aus einem ersten (6-1) und darauffolgenden zweiten Block (6-2) besteht, die über eine Kontaktfläche jedes der zwei Blöcke miteinander verbunden sind, wobei die mindestens zwei Blöcke mit Hilfe eines Herstellungssystems (20) ausgehend von einem Bewehrungskäfig (10) hergestellt werden, wobei das Herstellungsverfahren die folgenden Schritte aufweist:
- Gießen von Beton in einen ersten Bewehrungskäfig (10-1), um so den ersten Betonbaublock (6-1) zu erzeugen, der eine erste Kontaktfläche (9b) aufweist,
- Gießen von Beton in einen zweiten Bewehrungskäfig (10-2), um so den zweiten Betonbaublock (6-2) zu erzeugen, wobei der zweite Bewehrungskäfig in einer Schalung (21) angeordnet ist und die Schalung (21) so angeordnet ist, dass die erste Kontaktfläche (9b) des ersten Blocks (6-1) eine Begrenzungswand (26) für das Gießen des Betons darstellt, um so eine Kontaktfläche (9) des zweiten Blocks (6-2) zu bilden, und
- Trennen des ersten Blocks (6-1) und des zweiten Blocks (6-2) voneinander nach dem Formen des zweiten Blocks (6-2), insbesondere mit Hilfe eines Entschalungsprodukts, das vor dem Gießen des Betons auf die Kontaktfläche (9b) des ersten Blocks (6-1) gestrichen worden ist.

2. Verfahren nach Anspruch 1, in welchem im Verlaufe des Schritts des Gießens von Beton, um den zweiten Block (6-2) zu erzeugen, der erste Betonblock (6-1) gegenüber der Schalung (21) angeordnet wird, derart, dass der erste Betonblock (6-1) und der zweite Bewehrungskäfig (10-2) in gegenseitiger Verlängerung angeordnet sind.

3. Verfahren nach einem der Ansprüche 1 oder 2, in welchem die Schalung (21) in einem Abstand von einer Basis (22) des Herstellungssystems (20) positioniert wird, der in der Größenordnung der Abmessung des ersten Betonblocks in einer zur Kontaktfläche orthogonalen Richtung ist.

4. Verfahren nach Anspruch 3, in welchem die Abmessung eine Höhe (H) des ersten Betonblocks (6-1) ist.

5. Verfahren nach einem der vorstehenden Ansprüche, aufweisend einen Schritt zur geometrischen Prüfung der Schalung vor dem Formen jedes Blocks und/oder einen Schritt zur Prüfung der Abmessungen jedes geformten Blocks.

6. Verfahren zum Zusammenbauen eines Windturbinenturms, aufweisend:
- einen Schritt zur Herstellung mindestens zweier Betonbaublöcke mit Hilfe des Herstellungsverfahrens nach einem der Ansprüche 1 bis 5,
- einen Schritt zum Transportieren der mindestens zwei Blöcke, und
- einen Schritt zum Verbinden der im Laufe des Herstellungsschritts erzeugten mindestens zwei Blöcke zu einer Blockanordnung.

7. Verfahren zum Zusammenbauen nach Anspruch 6, aufweisend einen Schritt zum Anheben der Blockanordnung.

8. Verfahren zum Zusammenbauen nach Anspruch 7, in welchem der Schritt zum Verbinden und der Schritt zum Anheben zumindest teilweise gleichzeitig sind.

9. Verfahren zum Zusammenbauen nach dem vorstehenden Anspruch, in welchem der Schritt zum Verbinden einer ersten Blockanordnung zumindest gleichzeitig mit dem Schritt zum Anheben einer zweiten Blockanordnung ist.

## Claims

1. Method for manufacturing concrete construction blocks (6) for a wind-generator (1) tower (2) comprised of at least one first (6-1) and one second (6-2) consecutive block secured to one another by a contact surface of each of the two blocks, said at least two blocks being carried out by a system for manufacturing (20) using a cage of reinforcements (10), the manufacturing method comprising the following steps:
- pouring concrete into a first cage of reinforcements (10-1) so as to obtain the first concrete construction block (6-1) comprising a first contact surface (9b), and
- pouring concrete into a second cage of reinforcements (10-2) so as to obtain the second concrete construction block (6-2), the second cage of reinforcements being provided in a form (21) and the form (21) being arranged such that the first contact surface (9b) of the first block (6-1) makes up a wall for delimiting (26) the pouring of the concrete such as to form a contact surface (9) of the second block (6-2), and
- detaching the first block (6-1) and the second block (6-2), in particular thanks to a releasing product coated on the contact surface (9b) of the block (6-1) prior to the pouring of the concrete.

2. Method according to claim 1, wherein, during the step for pouring concrete in such a way as to obtain the second block (6-2), the first concrete block (6-1) is arranged facing the form (21) in such a way that the first concrete block (6-1) and the second cage of reinforcements (10-2) are in the extension of one another.

3. Method according to one of claims 1 or 2, wherein the form (21) is positioned at a distance from a base (22) of the system for manufacturing (20) by about the dimension of the first concrete block in a direction orthogonal to the contact surface.

4. Method according to claim 3, wherein the dimension is a height (H) of the first concrete block (6-1).

5. Method according to one of the preceding claims, comprising a step of carrying out an operation of geometric control of the form before the moulding of each block and/or a step of controlling dimensions of each moulded block.

6. Method for assembling a wind-generator tower, comprising:
- a step of manufacturing at least two concrete construction blocks obtained by the method of manufacturing according to one of claims 1 to 5,
- a step of transporting said at least two block, and
- a step of securing as a set of blocks said at least two blocks obtained during said step of manufacturing.

7. Method of assembly according to claim 6, comprising a step of lifting said set of blocks.

8. Method of assembly according to claim 7, wherein the step of securing and the step of lifting are at least partially concomitant.

9. Method of assembly as claimed in the preceding claim, wherein the step of securing of a first set of blocks is at least concomitant with the step of lifting a second set of blocks.
